# EUROPÄISCHE PATENTSCHRIFT

(11) **EP 3 299 232 B1**
(45) Veröffentlichungstag und Bekanntmachung des Hinweises auf die Patenterteilung: **10.04.2019**
(21) Anmeldenummer: 17401098.3
(22) Anmeldetag: 24.08.2017
(51) Int. Cl.: B60T 8/18, B60T 8/58, A01C 15/00

(54) **LANDWIRTSCHAFTLICHE VERTEILMASCHINE MIT BREMSKRAFTREGELANLAGE UND VERFAHREN ZUR REGELUNG DER BREMSKRAFT**
AGRICULTURAL SPREADER MACHINE WITH BRAKE FORCE-REGULATING SYSTEM AND METHOD FOR REGULATING BRAKE POWER
MACHINE DE RÉPARTITION AGRICOLE DOTÉE DU SYSTÈME DE RÉGLAGE DU FREINAGE ET PROCÉDÉ DE RÉGLAGE DE LA FORCE DE FREINAGE

(30) Priorität: 23.09.2016 DE 102016117952
(43) Veröffentlichungstag der Anmeldung: 28.03.2018
(73) Patentinhaber: Amazonen-Werke H. Dreyer GmbH & Co. KG, 49205 Hasbergen (DE)
(72) Erfinder: Brosch, Armin, 26125 Oldenburg (DE); Brinkmann, Stefan, 49143 Bissendorf-Natbergen (DE); Bruns, Nicolas, 26125 Oldenburg (DE)

(56) Entgegenhaltungen:
- EP-A1- 2 623 382
- EP-A2- 1 167 147
- EP-B1- 2 014 528
- WO-A1-2008/116521
- DE-A1- 3 207 793
- DE-U1-202010 014 789
- GB-A- 2 519 998

## Beschreibung

Die Erfindung betrifft eine landwirtschaftliche Verteilmaschine mit Bremskraftregelanlage gemäß dem Oberbegriff des Patentanspruches 1 und ein Verfahren zur Regelung der Bremskraft gemäß dem Patentanspruch 6.

Eine derartige landwirtschaftliche Verteilmaschine mit Bremskraftregelanlage und ein derartiges Verfahren zur Regelung der Bremskraft wird in der DE 20 2010 014 789 U1 beschrieben. Bei dieser landwirtschaftlichen Verteilmaschine wird mittels eines Signals eines Erfassungsmittels zur Erfassung eines Straßentransport-Betriebszustandes und/oder eines Feldbearbeitungs-Betriebszustandes ein Betätiger betätigt. Das Erfassungsmittel kann beispielsweise in Form eines an einer Fahrwerksstrebe angebrachten Dehnungsmessstreifens, eines Wegmesssensors, der ein Einsinken eines Fahrwerks-Federbeins misst, oder eines Drucksensors, der einen Reifendruck eines Rades des Fahrwerks erfasst, ausgebildet sein. Das Erfassungsmittel kann zusätzlich oder alternativ einen Fahrwerks-Lastenerfasser zur Erfassung der auf das Fahrwerk einwirkenden Last und/oder einen Stellungserfasser zur Erfassung der Stellung der Knickdeichsel oder der Hubvorrichtung umfassen. Der Betätiger betätigt nach Erhalt des Signals vom Erfassungsmittel automatisch einen Bremskraftumschalter. Der Bremskraftumschalter schaltet das Bremskraftniveau automatisch auf niedrig, wenn eine von der Erfassungseinrichtung erfasste Fahrwerkslast einen vorbestimmten Wert unterschreitet, weil beispielsweise im Feldbearbeitungs-Betriebszustand die Arbeitsaggregate eines Anbaugeräts den Boden berühren bzw. auf dem Boden abgestützt werden. Dadurch verringert sich die auf das Fahrwerk wirkende Last und das Bremskraftniveau wird an die Fahrwerkslast angepasst. Das Bremskraftniveau wird automatisch auf hoch geschaltet, wenn die erfasste Fahrwerkslast einen vorbestimmten Wert überschreitet, weil im Straßentransportbetrieb die auf das Fahrwerkt wirkende Last höher ist. Auch eine mehrstufige und/oder stufenlose Verstellung des Bremskraftniveaus ist, abhängig von der gemessenen auf das Fahrwerk einwirkenden Last, möglich.

Nachteilig bei der DE 20 2010 014 789 U1 ist, dass die beschriebene Vorrichtung nicht die Gewichtskraft der Verteilmaschine, die während der Straßenfahrt auf das Fahrwerk der landwirtschaftlichen Verteilmaschine wirkt, berücksichtigt. Es wird lediglich die geringere Last, die während des Feldbearbeitungs-Betriebszustands auf das Fahrwerk wirkt, erfasst. Anhand der erfassten Werte wird das Bremskraftniveau angepasst. Dadurch können bei Straßenfahrt nur voreingestellte Bremskraftniveaus verwendet werden, was dazu führen kann, dass das Bremskraftniveau zu hoch oder zu niedrig eingestellt sein kann. Bei zu hohem Bremskraftniveau können die Reifen der landwirtschaftlichen Verteilmaschine blockieren, was zum Kontrollverlust führen kann. Bei zu niedrigem Bremskraftniveau kann die Bremskraft nicht ausreichend sein, was den Bremsweg verlängert. Nachteilig ist außerdem, dass ein Drucksensor, der den Reifendruck eines Rads des Fahrwerks misst, von den Umweltbedingungen abhängig ist, da beispielsweise Temperaturunterschiede den Druck in den Reifen verändern. Außerdem können sich die Reifen in Arbeitsbetrieb der Verteilmaschine erwärmen. Dadurch kann eine falsche Gewichtskraft ermittelt werden.

In der EP 2 014 528 B1 wird beschrieben, dass der Bremskraftregler abhängig von dem tatsächlichen Materialfüllstand in einem Vorratsbehälter automatisch einstellbar ist. Zum Erfassen des Materialfüllstandes wird ein als Schwimmer ausgebildeter Sensor verwendet. Anhand des gemessenen Materialfüllstandes wird die auf Basis der StVO oder anderer Sicherheitsverordnungen notwendige Bremskraft ermittelt. In Verbindung mit in einer Speichereinheit hinterlegten verschiedenen Füllstandskurven und in der Speichereinheit hinterlegten Verstellwegen eines motorisches Steuerantriebs des Bremskraftreglers wird die ermittelte Bremskraft am Bremskraftregler eingestellt. Die in der Speichereinheit hinterlegten Werte werden dazu in einem Bordrechner und/oder Steuergerät ermittelt. Der Bordrechner und/oder das Steuergerät sind als Regeleinrichtung ausgebildet.

Nachteilig bei der EP 2 014 528 B1 ist, dass die Einstellung des Bremskraftreglers nur von dem Materialfüllstand im Vorratsbehälter abhängig ist. Um eine Gewichtskraft der ganzen Verteilmaschine anhand des Materialfüllstands zu berechnen, werden zusätzlich weitere Angaben benötigt. Nachteilig ist auch, dass für die richtigen Einstellwerte für den Bremskraftregler in der Speichereinheit verschiedene Füllkurven des Behälters und Verstellwege des motorischen Steuerantriebes des Bremskraftreglers hinterlegt sein müssen. Nur so kann der motorische Steuerantrieb dementsprechend gesteuert und/oder geregelt werden, dass die richtigen Einstellungen am Bremskraftregler vorgenommen werden. Hier kann es, zum Beispiel bei einer Veränderung der Maschinenkonfiguration durch Verwendung anderer Ausstattungselemente, dazu kommen, dass sich der Grundwert der Gewichtskraft der Verteilmaschine ändert. Der Anwender kann vergessen, die Änderung der Maschinenkonfiguration im System zu speichern. Dadurch wird der falsche Grundwert verwendet, auf dessen Basis dann, abhängig vom Materialfüllstand, der Bremskraftregler eingestellt wird. Dadurch kommt es zu falschen Einstellungen des Bremskraftreglers, da der geänderte Grundwert nicht berücksichtigt wurde. Auch kann es vorkommen, dass nachträglich ein anderer Vorratsbehälter angebracht wird, für den dann neue Füllkurven notwendig sind. Zudem kann ein zusätzlicher Vorratsbehälter verbaut werden, der dann aufwendig mit Sensoren ausgestattet werden muss oder zumindest mit dem Bordrechner und/oder Steuergerät verbunden werden muss. Zusätzlich dazu müssen die Füllkurven des zusätzlichen Vorratsbehälters in der Speichereinheit hinterlegt werden. Der Bordrechner und/oder das Steuergerät müssen zudem noch dahingehend angepasst werden, dass bei Ermittlung der Einstellwerte für den Bremskraftregler auch der zusätzliche Vorratsbehälter berücksichtigt wird. Ein Nachteil des als Schwimmer ausgebildeten Sensors ist, dass eventuell ungleichmäßig im Vorratsbehälter verteiltes Material oder hin- und herschwappende Flüssigkeit nicht richtig erfasst wird. Der Sensor kann nur punktuell den Materialfüllstand messen. Dadurch können Materialanhäufungen, z.B. in den Ecken des Vorratsbehälters, von dem als Schwimmer ausgebildeten Sensor nicht erfasst und somit auch nicht berücksichtigt werden.

Allgemein sind die Vorteile eines Anti-Blockier-Systems (ABS) aus dem Straßenverkehr bekannt. Dabei hilft das ABS, ein Blockieren der Räder zu verhindern. Dadurch wird einem Kontrollverlust durch das Blockieren der Reifen beim Bremsen des Fahrzeuges vorgebeugt. Zudem wird der Bremsweg durch ein ABS auf einer Straße in vielen Fällen verkürzt. Auch wird durch das ABS der Verschleiß der Reifen deutlich reduziert. Beispielsweise wird verhindert, dass sich die Reifen beim Blockieren beim Bremsen nur auf einem Teil der Lauffläche abnutzen, was einen unruhigen Lauf der Reifen zur Folge hätte.

Nachteilig bei ABS-Systemen ist, dass diese nur die Drehzahl der Räder berücksichtigen, nicht jedoch die Gewichtskraft der Maschine, die auf die Räder wirkt. Daher ist es nicht möglich, eine von der Gewichtskraft der Maschine abhängige Bremskraft als Basisbremskraft einzustellen. Weiter ist es nachteilig, dass während des Arbeitsbetriebs die Funktion des ABS-Systems nicht einstellbar ist, sondern höchstens ein gesamtes Abschalten. Das ist nachteilig, da das unpassend eingestellte ABS-System auf lockerem oder rutschigem Untergrund den Bremsweg verlängern kann.

Eine Kombination eines ABS-Systems mit einer lastabhängigen Bremskraftregelung zeigen die GB 2 519 998 A, die EP 1 167 147 A2 sowie die DE 32 07 793 A1. Hierbei bleibt allerdings der bereits geschilderte Nachteil bestehen, dass nur der Füllstand der Verteilmaschine, nicht aber deren eigentliche Gewichtskraft berücksichtigt wird.

Der Erfindung liegt die Aufgabe zugrunde, eine landwirtschaftliche Verteilmaschine mit automatischer Bremskraftregelanlage in Abhängigkeit von der konkreten, aktuellen Gewichtskraft der Verteilmaschine zu schaffen.

Diese Aufgabe wird erfindungsgemäß dadurch gelöst, dass die Bremskraftregelanlage geeignet ist, mittels der von einer zweiten Sensoreinrichtung erfassten Drehzahlen der Fahrwerksräder den Bremsschlupf der Fahrwerksräder zu ermitteln und durch Zusammenführen der von einer ersten und der zweiten Sensoreinrichtung erfassten und der von der Bremskraftregelanlage ermittelten Daten die aktuelle Bremskraft derart zu regeln, dass zu jedem Zeitpunkt eine entsprechend der aktuellen Gewichtskraft optimierte und/oder optimale Bremswirkung erzielt wird.

Ein dadurch entstehender Vorteil ist, dass anhand der Gewichtskraft der Verteilmaschine die Masse der Verteilmaschine einfach bestimmt werden kann. Vorteilhaft ist auch, dass zum Beispiel bei einer Gefahrenbremsung im Straßenverkehr die entsprechend der aktuellen Gewichtskraft der Verteilmaschine optimierte und/oder optimale Bremswirkung erzielt wird. Als optimierte und/oder optimale Bremswirkung wird in diesem Zusammenhang die maximale Bremskraft für die aktuellen Masse der Maschine ohne Blockieren der gebremsten Räder verstanden. Damit wird ein schnelles und sicheres zum Stehen kommen bewirkt. So kann in Gefahrensituationen im Straßenverkehr der Bremsweg so kurz wie möglich gehalten werden. So werden Unfälle verhindert. Außerdem kann dadurch der Verschleiß der Räder der Maschine verringert werden. Zudem kann dadurch ein abschnittsweiser Verschleiß an den Umfangsflächen der Räder vermieden werden, was auch den Vorteil eines ruhigeren Laufs der Räder hat.

Um am Straßenverkehr teilzunehmen, dürfen Fahrzeuge und Maschinen eine maximal zulässige Breite in Transportposition nicht überschreiten. Das macht es erforderlich, dass die Breite der Maschinen vor der Fahrt auf einer Straße auf das vorgeschriebene Maß reduziert wird. Dazu können beispielsweise Teile der Maschine eingeklappt werden. Teilweise ist es auch erforderlich, die angehängte Maschine anzuheben, um die für eine Straßenfahrt nötige Bodenfreiheit zu erhalten. Dazu kann ein Fahrwerk einer solchen Maschine in eine Arbeits- oder Transportposition verbracht werden.

Erfindungsgemäß ist das Fahrwerk so ausgebildet, dass das Fahrwerk mittels mindestens eines hydraulischen oder pneumatischen Stellelements zwischen einer Arbeitsposition und einer Transportposition verbringbar ist. Erfindungsgemäß ist die erste Sensoreinrichtung geeignet, den Arbeitsdruck des hydraulischen oder pneumatischen Stellelements zu erfassen.

Vorteilhaft ist dabei, dass die Verteilmaschine anhand des Arbeitsdrucks erfassen kann, ob die Verteilmaschine sich in Arbeits- oder Transportposition befindet. Ein weiterer Vorteil ist, dass der von der ersten Sensoreinrichtung gemessene Arbeitsdruck der Gewichtskraft der Verteilmaschine entgegengerichtet ist, wodurch anhand des Kräftegleichgewichts die Gewichtskraft der Verteilmaschine ermittelbar ist.

Vorteilhaft ist die Bremskraftregelanlage geeignet, die aktuell auf das Fahrwerk wirkende Gewichtskraft anhand des von der ersten Sensoreinrichtung ermittelten Arbeitsdrucks des hydraulischen oder pneumatischen Stellelements zu ermitteln.

Ein Vorteil dabei ist, dass zur Bestimmung der auf das Fahrwerk wirkenden Gewichtskraft keine weiteren Werte benötigt werden. Dabei wird die Gewichtskraft anhand des ermittelten Arbeitsdrucks ermittelt, der der Gewichtskraft der Verteilmaschine entgegengerichtet ist. Weiter ist vorteilhaft, dass die Werte in einer Speichereinheit der Bremskraftregelanlage gespeichert werden können und im Zusammenhang mit anderen in der Speichereinheit gespeicherten Werten weiter verarbeitet werden können. Es kann außerdem vorgesehen sein, dass die auf das Fahrwerk wirkende Last in Transport- und/oder Arbeitsposition kontinuierlich gemessen wird, um anhand der Differenz zwischen mindestens zwei Werten der Gewichtskraft der Verteilmaschine die ausgebrachte Menge an Material aus dem Vorratsbehälter zu bestimmen. Vorteilig daran ist, dass parallel zur Bestimmung der ausgebrachten Menge an Material aus dem Vorratsbehälter die an der Verteilmaschine eingestellte Ausbringmenge überprüft und/oder überwacht werden kann.

Die weitere Verarbeitung der in der Speichereinheit hinterlegten Werte und Zusammenhänge zwischen aktuell auf das Fahrwerk wirkender Gewichtskraft und erforderlicher Bremskraft der Bremsanlage erfolgt vorteilhaft dadurch, dass die Bremskraftregelanlage geeignet ist, die erforderliche Bremskraft der Bremsanlage anhand des in der Speichereinheit hinterlegten Zusammenhangs in optimierter Weise einzustellen.

Ein Vorteil liegt darin, dass so der an die Gewichtskraft angepasste optimierte und/oder optimale Bremsdruck durch die Bremskraftregelanlage berechnet und eingestellt werden kann. Auch ist die Möglichkeit des Speicherns der aktuellen Werte in der Speichereinheit der Bremskraftregelanlage gegeben. Zudem können auch die Werte der zweiten Sensoranordnung in der Speichereinheit hinterlegt werden.

Eine Weiterbildung ist, dass in der Speichereinheit der Bremskraftregelanlage Zusammenhänge zwischen Bremsschlupf sowie optimaler Bremswirkung und/oder optimaler Bremswirkung sowie erforderlicher Bremskraft hinterlegt sind.

Vorteilhaft hierbei ist, dass die von der zweiten Sensoreinheit ermittelten Daten über die in der Speichereinheit der Bremskraftregelanlage hinterlegten Zusammenhänge direkt zum Ermitteln des Bremsschlupfes verwendet werden können. Dieser Vorgang wird von der Bremskraftregelanlage durchgeführt. Ein weiterer Vorteil ist, dass die Zusammenhänge zwischen Bremsschlupf sowie optimaler Bremswirkung und/oder optimaler Bremswirkung sowie erforderlicher Bremskraft in einer Speichereinheit hinterlegt sind, sodass ein Vergleich der Werte einfach möglich ist. Der Vergleich bildet die Grundlage für das aktuelle Einstellen der Bremskraft. Weiter ist vorteilhaft, dass durch die hinterlegten Zusammenhänge in der Speichereinheit und der kontinuierlichen Berechnung der Bremskraftvariation die Möglichkeit besteht, zu ermitteln, ob Komponenten der Bremsanlage, beispielsweise die Bremsbeläge, verschlissen sind. So könnte ausgelesen werden, wie bei einem konstant bleibenden Grundwert die Bremskraftvariation immer größer wird. Überschreitet die Bremskraftvariation einen bestimmten Wert, könnte der Anwender der Verteilmaschine in geeigneter Weise auf eine zu hohe Bremskraftvariation hingewiesen werden, was auf Verschleiß in der Bremsanlage hindeuten kann.

Die zuvor beschriebene Vorrichtung zur Regelung der Bremskraft einer entsprechenden landwirtschaftlichen Verteilmaschine, ist zum Ausführen folgenden Verfahrens geeignet:
- Verbringen eines Fahrwerks mittels des hydraulischen oder pneumatischen Stellelements in seine Transportposition,
- Erfassen des Arbeitsdrucks des hydraulischen oder pneumatischen Stellelements in der Transportposition mittels der ersten Sensoreinrichtung,
- Ermitteln der aktuell auf das Fahrwerk wirkenden Gewichtskraft durch die Bremskraftregelanlage,
- Einstellen der erforderlichen Bremskraft der Bremsanlage durch die Bremskraftregelanlage anhand des in der Speichereinheit hinterlegten Zusammenhangs zwischen auf das Fahrwerk wirkender Gewichtskraft und erforderlicher Bremskraft,
- Erfassen der Drehzahl der Fahrwerksräder mittels der zweiten Sensoranordnung und Ermitteln des aktuellen Bremsschlupfes durch die Bremskraftregelanlage,
- Ermitteln der erforderlichen Bremskraftvariation der Bremsanlage anhand der in der Speichereinheit hinterlegten Zusammenhänge zwischen Bremsschlupf und optimaler Bremswirkung sowie optimaler Bremswirkung und erforderlicher Bremskraft und
- Regeln der aktuellen Bremskraft anhand der erfassten und ermittelten Daten derart, dass zu jedem Zeitpunkt eine optimale Bremswirkung erzielt wird.

Vorteilhaft bei diesem Verfahren ist, dass beim Verbringen der Maschine in die Transportposition der Arbeitsdruck der Stellelemente direkt erfasst und für die Einstellung der Bremskraft weiter verarbeitet wird. Zudem ist eine Überwachung des Arbeitsdrucks während des Verbringens in Transportposition möglich. So können Störungen anhand zu hoher Drücke frühzeitig erkannt werden. Zudem ist das Verbringen in Transportposition mittels hydraulischer und/oder pneumatischer Stellelemente vorteilhaft, da das für den Anwender deutlich einfacher und bequemer ist, als die nötigen Einstellungen an der Verteilmaschine manuell durchzuführen.

Es ist vorteilhaft den Arbeitsdruck unabhängig von anderen Werten zu ermitteln, da auf diese Weise eine separate Abspeicherung des Wertes in der Speichereinheit der Bremskraftregelanlage möglich ist. Dadurch ist es möglich, den Verlauf des Arbeitsdrucks der hydraulischen und/oder pneumatischen Stellelemente während der Straßenfahrt zu ermitteln. So können Spitzen im Arbeitsdruck erkannt werden, womit die maximal auf das Fahrwerk wirkende Belastung bestimmt werden kann.

Ist der Arbeitsdruck ermittelt, wird anhand des Arbeitsdrucks die Gewichtskraft ermittelt. Dadurch ist es möglich, später bei Bedarf die Gewichtsdifferenz zwischen Beginn der Fahrt und Ende der Fahrt zu berechnen, um eventuelle Verluste während der Straßenfahrt zu ermitteln. So können zum Beispiel Undichtigkeiten erkannt werden.

Vorteilhaft an dem erfindungsgemäßen Einstellen der erforderlichen Bremskraft der Bremsanlage ist, dass das Einstellen auf Basis aktueller Daten geschieht. Dadurch kann die wirkende Bremskraft für die Verteilmaschine jederzeit anhand aktueller Daten auf die aktuelle Fahrsituation angepasst und eingestellt werden.

Weiter ist vorteilhaft, dass der eingestellte Bremskraftwert in der Speichereinheit hinterlegt werden kann, um immer den zuletzt eingestellten Wert gespeichert zu haben, um eventuelle Differenzen auswerten zu können, was eine eventuelle Optimierung der Arbeitsabläufe vereinfachen kann.

Daraus ergibt sich weiter der Vorteil, dass der einzustellende Bremskraftwert nur beim Verbringen der Verteilmaschine in Transportposition bestimmt werden muss, da anzunehmen ist, dass sich während der Straßenfahrt die Gewichtskraft nicht oder zumindest nicht relevant ändert.

Vorteilhaft ist weiter, dass der eingestellte Bremskraftwert während der Straßenfahrt nicht permanent neu gemessen und eingestellt werden muss. Ein anderer Vorteil des Verfahrens ist, dass die durch die zweite Sensoranordnung ermittelten Drehzahlwerte der Fahrwerksräder und das Ermitteln des aktuellen Bremsschlupfes in einem Schritt stattfinden, da die Drehzahlwerte der Fahrwerksräder nur zur Ermittlung des Bremsschlupfes dienen. Vielfach kann auf eine Speicherung des Drehzahlwertes verzichtet werden, da der ermittelte Wert des Bremsschlupfes im Speicher hinterlegt wird.

Die in der Speichereinheit hinterlegten Zusammenhänge zwischen Bremsschlupf und optimaler Bremswirkung sowie optimaler Bremswirkung und erforderlicher Bremskraft sind vorteilhafterweise in einem Schritt zu verarbeiten. Dadurch wird nur ein Wert der Bremskraftvariation zum Regeln der aktuellen Bremskraft erstellt. So muss nur ein Wert an die Verteilmaschine übermittelt werden, was Zeit spart, wodurch die Reaktionszeit auf Veränderungen beim Bremsschlupf verringert wird.

Ein Vorteil des beschriebenen Verfahrens ist dadurch gegeben, dass die auf Basis der aktuell während der Straßenfahrt auf das Fahrwerk wirkenden Gewichtskraft ermittelte erforderliche Bremskraft durch die Bremskraftregelanlage als Grundwert für die aktuelle Bremskraft eingestellt wird. Dieser Grundwert der aktuellen Bremskraft wird anhand der auf Basis des Bremsschlupfes ermittelten erforderlichen Bremskraftvariation variiert.

Weiter ist es vorteilhaft, dass durch den gespeicherten Grundwert nicht nochmal die Gewichtskraft ermittelt werden muss, wenn die Verteilmaschine in Transportposition gebremst wird, es wird lediglich die Bremskraftvariation in Abhängigkeit von Bremsschlupf und Gewichtskraft der Verteilmaschine berechnet. Die Bremskraftvariation kann dabei kontinuierlich neu berechnet werden. Dadurch ist es möglich, zu jedem Zeitpunkt der Straßenfahrt eine entsprechend der aktuellen Gewichtskraft optimierte und/oder optimale Bremswirkung zu erzielen.

Weitere Einzelheiten der Erfindung sind der Beispielsbeschreibung und den Zeichnungen zu entnehmen. Die Zeichnungen zeigen
- Fig.1: die an einer Zugmaschine angekoppelte landwirtschaftliche Verteilmaschine in Seitenansicht,
- Fig. 2: das Fahrgestell der landwirtschaftlichen Verteilmaschine gemäß Fig. 1 in perspektivischer Ansicht von schräg vorn,
- Fig. 3: eine Detailansicht des Fahrwerks mit hydraulischen und/oder pneumatischen Stellelementen in perspektivischer Ansicht gemäß Fig. 2, jedoch in vergrößerter Teilansicht und
- Fig. 4: einen schematischen Regelkreis des Hydrauliksystems des Fahrwerks.

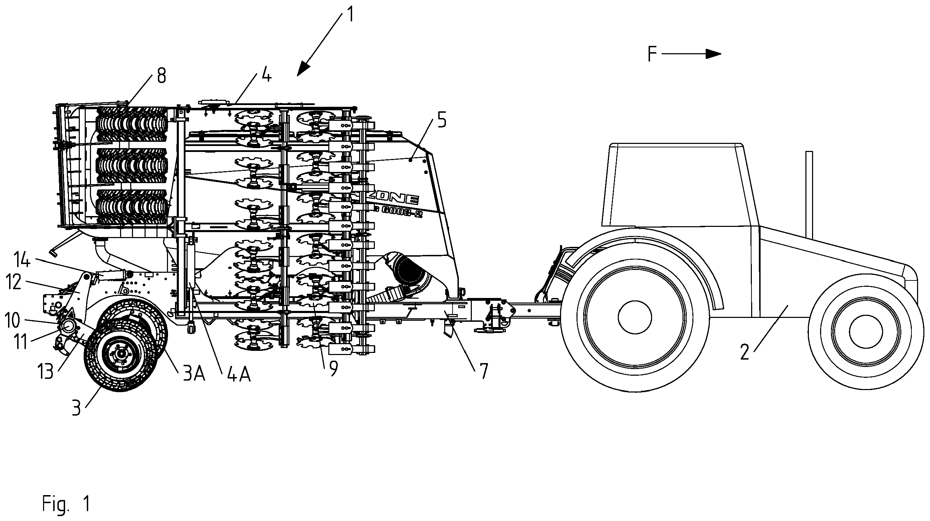

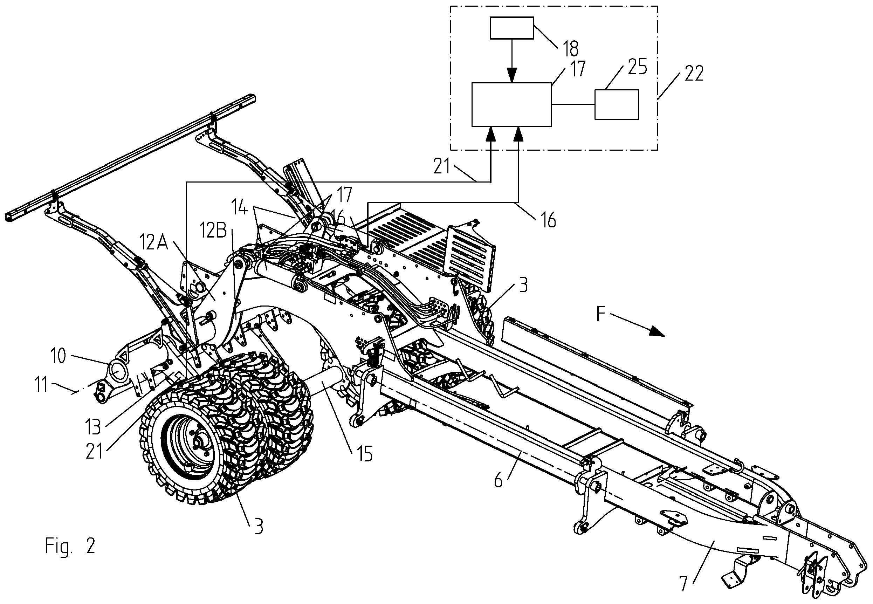

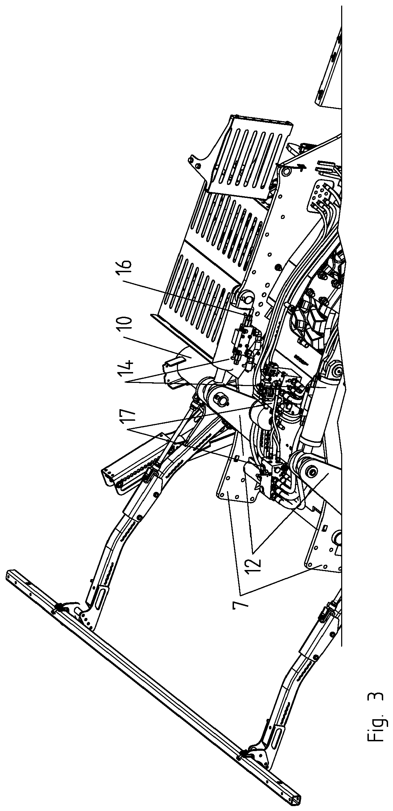

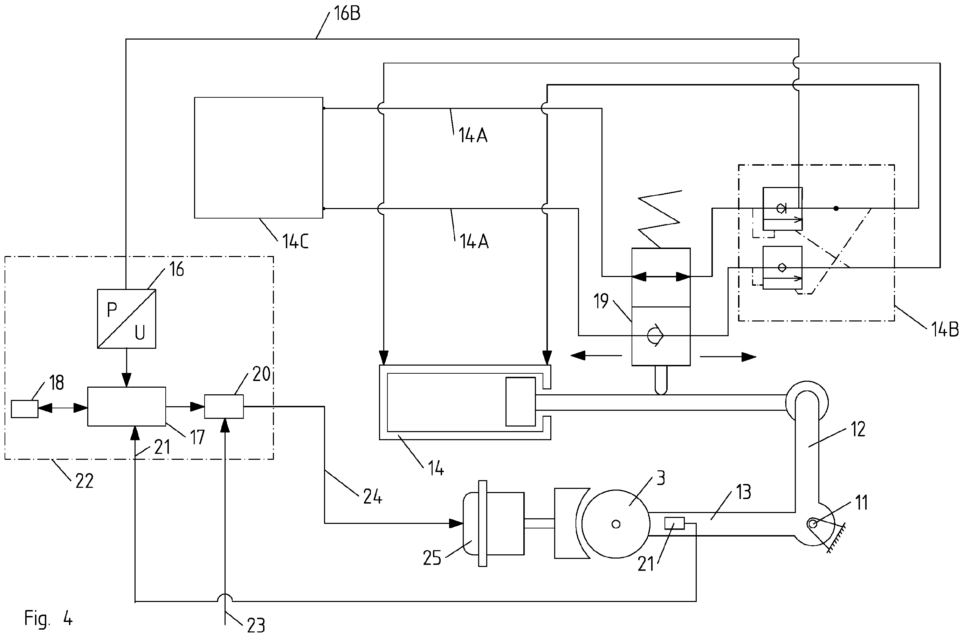

In den Fig. 1 bis 3 ist beispielhaft eine landwirtschaftliche Verteilmaschine 1 dargestellt, die an eine Zugmaschine 2 angekoppelt ist. Die landwirtschaftliche Verteilmaschine 1 ist hier als Sämaschine ausgebildet und in Transportposition dargestellt. Die Verteilmaschine 1 ist über Fahrwerksräder 3 auf dem Erdboden abgestützt. Eine Anordnung von Walzenrädern 3A befindet sich nicht in Kontakt mit dem Erdboden, so dass sich die landwirtschaftliche Verteilmaschine 1 in Transportposition befindet. Die Fahrwerksräder 3 umfassen auch eine in den Figuren 1 und 3 nicht dargestellte Bremsanlage 25. Die Bremsanlage 25 ist in den Figuren 2 und 4 schematisch dargestellt. Die landwirtschaftliche Verteilmaschine 1 weist ausklappbare Ausleger 4 auf, die an den Längsseiten der landwirtschaftlichen Verteilmaschine 1 angebracht sind. In Fig. 1 ist nur ein Ausleger 4 dargestellt. In der in Fig. 1 dargestellten Transportposition der Verteilmaschine 1 sind die Ausleger 4 eingeklappt. An den Auslegern 4 sind jeweils mehrere Walzenräder 8 angebracht, wie in Fig. 1 dargestellt, die je nach Einsatzzweck ausgetauscht und/oder angepasst werden können. Daher haben die Walzenräder 8, die an Ausleger 4 angebracht sind, in der Transportposition keinen Kontakt zum Erdboden. Aus der Transportposition kann die Verteilmaschine 1 in eine Arbeitsposition verbracht werden. Dazu sind die Ausleger 4 um eine parallel zur Längsachse der Verteilmaschine 1 verlaufende Schwenkachse 6 am Rahmen 7 schwenkbar angebracht und werden mittels Auslegerstellelemente 4A verschwenkt. In Fig. 2 ist die Schwenkachse 6 im vorderen Bereich des Rahmens 7 dargestellt. An den Auslegern 4 sind außerdem jeweils mehrere Bodenbearbeitungswerkzeuge 9 angebracht, die je nach Einsatzzweck ausgetauscht und/oder angepasst werden. Zusätzlich weist die Verteilmaschine 1 einen Vorratsbehälter 5 auf.

Am hinteren Teil des Rahmens 7 ist ein Querträger 10 angebracht. Der Querträger 10 weist eine quer zur Längsachse der Verteilmaschine 1 und gleich der Längsachse des Querträgers 10 verlaufende Querachse 11 auf. Der Querträger 10 ist um seine Querachse 11 drehbar gelagert. An dem Querträger 10 sind Stellelementhebel 12 angebracht, die über den Querträger 10 drehfest mit Schwingen 13 verbunden sind, wie in Fig. 2 zu erkennen ist. Die Stellelementhebel 12 sind in dem Ausführungsbeispiel in Fig. 2 und 3 zweiteilig aufgebaut in Form von zwei parallel zueinander angebrachten plattenförmigen Bauteilen 12A und 12B, wobei zwischen den plattenförmigen Bauteilen 12A und 12B ein Abstand vorgesehen ist, durch den es möglich ist, dass zwischen den plattenförmigen Bauteilen 12A und 12B hydraulische und/oder pneumatische Stellelemente 14 angreifen können. In anderen Varianten können die Stellelementhebel 12 auch einteilig oder mehrteilig ausgebildet sein. Die Schwingen 13 dienen als Aufnahme für die Fahrwerksräder 3 und sind in Fahrtrichtung F der Verteilmaschine 1 zeigend angebracht. Der Querträger 10 ist um die Querachse 11 drehbar, somit sind die drehfest mit dem Querträger 10 verbundenen Stellelementhebel 12 und die Schwingen 13 um die Querachse 11 schwenkbar.

Es sind Stellelemente 14 vorgesehen, die mit einem ersten Ende an den Stellelementhebeln 12 angelenkt sind. Die Stellelemente 14 sind mit einem zweiten, dem ersten gegenüberliegenden, Ende am Rahmen 7 der Verteilmaschine 1 angelenkt. Durch eine Längenänderung der Stellelemente 14 werden die mit ihnen verbundenen Stellelementhebel 12 um die Querachse 11 geschwenkt. Durch die drehfeste Verbindung der Stellelementhebel 12 mit den Fahrwerksrädern 3 über den Querträger 10 und die Schwingen 13, werden durch Längenänderung der Stellelemente 14 die Fahrwerksräder 3 um die Querachse 11 nach oben oder nach unten geschwenkt. Mit Hilfe der Schwenkbewegung um die Querachse 11 werden die Fahrwerksräder 3 abgesenkt oder angehoben.

In den Fig. 2 und 3 sind aus Gründen der Übersichtlichkeit nur die Fahrwerksräder 3 dargestellt. Die in Fig. 2 und 3 nicht dargestellten Walzenräder 3A sind in dem Ausführungsbeispiel zwischen den vier paarweise angeordneten Fahrwerksrädern 3, an einer nicht schwenkbaren Räderachse 15 angebracht. Ebenso sind in Fig. 2 und 3 der Vorratsbehälter 5 und der Ausleger 4 samt daran angebrachter Bauteile nicht dargestellt.

Da die Transportposition von der Position der Fahrwerksräder 3 abhängt, deren Position wiederum durch die Schwenkbewegung von der Längenänderung der Stellelemente 14 bestimmt wird, ist die Änderung der Position der Verteilmaschine 1 in Transport- oder Arbeitsposition von der Längenänderung der Stellelemente 14 abhängig. Die Stellelemente 14 sind im Ausführungsbeispiel als Hydraulikzylinder ausgebildet, haben eine vordere und eine hintere Endlage und sind über Zylinderversorgungsleitungen 14A mit einem Zylinderstellventil 14B verbunden. Das Zylinderstellventil 14B ist mit den Stellelementen 14 und mit einer Hydraulikeinheit 14C verbunden. Die hintere Endlage ist erreicht, wenn die Stellelemente 14 ihre minimale Auslängung erreichen, das heißt, wenn die Kolbenstangen vollkommen eingezogen sind. Die vordere Endlage ist erreicht, wenn die Stellelemente 14 ihre maximale Auslängung erreichen, das heißt, wenn die Kolbenstangen vollkommen ausgefahren sind.

Die Transportposition der Verteilmaschine 1 ist erreicht, wenn die Stellelemente 14 in hinterer Endlage und die Ausleger 4 eingeklappt sind. In Fahrtrichtung F gesehen rechts neben der Verteilmaschine 1 stehend werden beim Verbringen der Stellelemente 14 in die hintere Endlage die Stellelementhebel 12 im Uhrzeigersinn um die Querachse 11 geschwenkt. Durch die drehfeste Verbindung der Stellelementhebel 14 mit dem Querträger 10 und den an dem Querträger 10 drehfest angebrachten Schwingen 13, an denen die Fahrwerksräder 3 angebracht sind, dreht sich bei Längenänderung der Stellelemente 14 der Querträger 10 um die Querachse 11. Dadurch werden die Fahrwerksräder 3 abgesenkt und gegen den Erdboden gedrückt. Dadurch werden die Walzenräder 3A vom Erdboden abgehoben und der Rahmen 7 angehoben, wodurch nur noch die Fahrwerksräder 3 Kontakt zum Erdboden haben. In Transportposition befinden sich die Stellelemente 14 in der hinteren Endlage. In der hinteren Endlage dürfen die Stellelemente 14 nicht vollständig eingefahren sein, damit ein Restvolumen an Hydraulikflüssigkeit in den Stellelementen 14 verbleibt.

Um die Verteilmaschine 1 von der Transportposition in die Arbeitsposition zu verbringen, werden die Stellelemente 14 in die vordere Endlage verbracht und die Ausleger 4 werden durch die Auslegerstellelemente 4A ausgeklappt. In Fahrtrichtung F gesehen rechts neben der Verteilmaschine 1 stehend werden beim Ausfahren der Stellelemente 14 die Stellelementhebel 12 gegen den Uhrzeigersinn gedreht. Durch die drehfeste Verbindung mit dem Querträger 10 und den an dem Querträger 10 drehfest angebrachten Schwingen 13, an denen die Fahrwerksräder 3 angebracht sind, schwenkt der Querträger 10 um die Querachse 11, wodurch die Fahrwerksräder 3 angehoben werden. Dadurch werden die Walzenräder 3A und die an den Auslegern 4 angebrachten Walzenräder 8 dem Erdboden angenähert, bis die Walzenräder 3A und 8 Kontakt mit dem Erdboden haben. In Arbeitsposition, also bei ausgeklappten Auslegern 4 und angehobenen Fahrwerksrädern 3, haben alle Räder 3, 3A, und 8 Kontakt zum Erdboden und sind in etwa fluchtend zueinander ausgerichtet, wodurch die Räder 3, 3A und 8 in Arbeitsposition als Walze dienen.

Den Stellelementen 14 ist eine als Drucksensor ausgeführte erste Sensoreinrichtung 16 zugeordnet. Die erste Sensoreinheit ist mit einer Steuerungs- und/oder Regelungseinrichtung 17 über eine Drucksensorleitung 16B verbunden, wobei die Drucksensorleitung 16B als Kabel oder drahtlos ausgebildet sein kann. Der Steuer- und/oder Regelungseinrichtung 17 ist eine Speichereinheit 18 zugeordnet. Eine als Drehzahlsensor ausgeführte zweite Sensoreinheit 21 ist den Fahrwerksrädern 3 zugeordnet, um die Raddrehzahl der Fahrwerksräder 3 zu erfassen und die erfassten Werte via als Kabel ausgeführter Datenleitung oder drahtlos an die Steuerungs- und/oder Regelungseinrichtung 17 zu übermitteln. Mit der Steuerungs- und/oder Regelungseinrichtung 17 ist ein Bremsdruckregelventil 20 verbunden, welches dazu geeignet ist, von der Steuerungs- und/oder Regelungseinrichtung 17 ermittelte Bremsdruckwerte vor dem Straßentransport in Abhängigkeit von der aktuellen Gewichtskraft der Verteilmaschine 1 und dem aktuellen Bremsschlupf einzustellen. Im Ausführungsbeispiel sind die Steuerungs- und/oder Regelungseinheit 17, die Speichereinheit 18, die erste Sensoreinrichtung 16 und das Bremsdruckregelventil 20 als eine Bremskraftregelanlage 22 zusammengefasst, wobei die erste Sensoreinheit 16 mit den Stellelementen 14 verbunden ist.

In dem schematisch dargestellten Regelkreis der beispielhaften Verteilmaschine 1 in Fig. 4 ist dargestellt, wie die einzelnen Elemente der Bremskraftregelanlage 22 miteinander in Verbindung stehen. Das Verfahren zur Regelung der Bremskraft einer Landwirtschaftliche Verteilmaschine 1, wobei die Fahrwerksräder 3 mit der, eine Bremskraftregelanlage 22 umfassenden, Bremsanlage 25 ausgestattet sind, wird hier beispielhaft erläutert.

Wie in Fig. 4 dargestellt ist, ist der Bremskraftregelanlage 22 die Speichereinheit 18 zugeordnet, in der ein Zusammenhang zwischen der aktuell auf die Fahrwerksräder 3 wirkenden Gewichtskraft und der entsprechend erforderlichen Bremskraft der Bremsanlage 25 hinterlegt ist. Die erste Sensoreinrichtung 16 dient zur Echtzeit-Erfassung der aktuell auf die Fahrwerksräder 3 wirkenden Gewichtskraft. Die Bremskraftregelanlage 22 ist geeignet, die Bremskraft der Bremsanlage 25 anhand der erfassten aktuell auf die Fahrwerksräder 3 wirkenden Gewichtskraft einzustellen. Die zweite Sensoreinrichtung 21 dient zur Echtzeit-Erfassung der Drehzahlen der Fahrwerksräder 3.

Zunächst wird von der ersten Sensoreinheit 16 der Arbeitsdruck in den Stellelementen 14 erfasst. Dazu ist es notwendig, dass das Restvolumen an Hydraulikflüssigkeit im Stellelement 14 vorhanden ist. Damit das Restvolumen in den Stellelementen 14 verbleibt wird ein dem Stellelement 14 zugeordnetes Stoppventil 19 beim Verbringen der Verteilmaschine 1 in Transportposition betätigt. Beim Verbringen der Verteilmaschine 1 in Transportposition wird dabei durch eine geeignete Ausgestaltung der Kolbenstange mindestens eines der Stellelemente 14 das Stoppventil 19 betätigt. Dadurch wird durch das Stoppventil 19 der Volumenstrom der Hydraulikflüssigkeit unterbrochen, wodurch das Verbringen in Transportposition in einer Position unterbrochen wird, in der die Stellelemente 14 nicht ganz eingefahren sind, die Walzenräder 3A jedoch keinen Kontakt mehr zum Erdboden haben. Lediglich die Fahrwerksräder 3 verbleiben in Kontakt mit dem Erdboden. Somit befindet sich die Verteilmaschine 1 in Transportposition und es bleibt ein Restvolumen an Hydraulikflüssigkeit in den Stellelementen 14. Das Stoppventil 19 wird im Ausführungsbeispiel mechanisch durch eine geeignete Ausgestaltung der Kolbenstange eines der Stellelemente 14 betätigt, wodurch das Stoppventil 19 von einer Durchflussstellung in eine Durchflusssperrstellung wechselt und so den Hydraulikflüssigkeitsstrom zum Einfahren der Stellelemente 14 sperrt. Das Stoppventil 19 kann auch durch beispielsweise Magnetventile oder durch elektrische Sensoren geschaltet werden.

Da der relative Abstand der Fahrwerksräder 3 zum Rahmen 7 durch die Stellelemente 14 verändert wird, werden die Fahrwerksräder 3 nur durch die Stellelemente 14 in der relativen Position zum Rahmen 7 gehalten. Dazu muss ein Arbeitsdruck in den Stellelementen 14 aufgebaut werden, der ausreichend groß ist, um eine Kraft zu erzeugen, die der Gewichtskraftkomponente entgegenwirkt. Dadurch wirkt eine von der Einbaulage der Stellelemente 14 abhängige Gewichtskraftkomponente der Verteilmaschine 1 entgegen des Arbeitsdrucks in den Stellelementen 14. Eine Ermittlung der Gewichtskraft anhand der durch die erste Sensoreinheit 16 ermittelten Werte des Arbeitsdrucks in den Stellelementen 14 und den allgemein bekannten Verfahrensweisen zur Berechnung einer Kraft anhand eines Drucks im Zylinder, wird in einer Steuer- und/oder Regelungseinrichtung 17 durchgeführt. Dazu werden zunächst die von der ersten Sensoreinheit 16 erfassten Werte des Arbeitsdrucks in den Stellelementen 14 an die Steuer- und/oder Regelungseinrichtung 17 übertragen. Die Übertragung kann mittels einer als Kabel ausgebildeten Datenleitung oder drahtlos erfolgen. In der Steuer- und/oder Regelungseinrichtung 17 wird anhand der ermittelten Werte des Arbeitsdrucks in den Stellelementen 14 und den in der Speichereinheit 18 hinterlegten spezifischen Abmessungen der Stellelemente 14 die Kraft berechnet, die die Stellelemente 14 aktuell aufbringen, um der entlang der Längsrichtung der Stellelemente 14 wirkende Gewichtskraftkomponente entgegenzuwirken und die Verteilmaschine 1 in Transportposition zu halten. Über die Gewichtskraft kann auch die Masse der Verteilmaschine 1 ermittelt werden. Der ermittelte Wert der Gewichtskraft kann in der Speichereinheit 18 hinterlegt werden. Bei mehr als einem Stellelement 14, teilt sich die Gewichtskraftkomponente auf die Anzahl der Stellelemente 14 auf. Dies wird bei Ermittlung der Gewichtskraft der Verteilmaschine 1 von der Steuer- und/oder Regelungseinrichtung 17 berücksichtigt. Auch wird berücksichtigt, dass nicht alle Stellelemente 14 mit einer ersten Sensoreinrichtung 16 ausgestattet sein müssen.

In der Speichereinheit 18 sind Zusammenhänge zwischen aktuell auf das Fahrwerk wirkender Gewichtskraft und notwendiger Bremskraft hinterlegt. Die notwendige Bremskraft wird durch die StVO oder andere einschlägige Sicherheitsvorschriften vorgegeben. Aus dem Zusammenhang zwischen aktuell auf das Fahrwerk wirkender Gewichtskraft und notwendiger Bremskraft ergibt sich eine anhand der aktuellen Gewichtskraft der Verteilmaschine 1 optimierte und/oder optimale Bremskraft. Anhand der optimierten und/oder optimalen Bremskraft wird ein Bremsdruckregelventil 20 automatisch angesteuert und eingestellt. Das Bremsdruckregelventil 20 regelt den in einer Zuleitung 23 anliegenden Druck auf einen von der optimierten und/oder optimalen Bremskraft abhängigen Bremsdruck. Der von dem Bremsdruckregelventil 20 eingestellte Bremsdruck wird über eine Bremsleitung 24 an die den Fahrwerksrädern 3 zugeordnete Bremsanlage 25 übertragen und die Bremsanlage 25 entsprechend aktiviert. Der Wert der optimierten und/oder optimalen Bremskraft wird in der Speichereinheit 18 als Grundwert für die Bremsanlage 25 hinterlegt. Auch ist es möglich, eine kontinuierliche Ermittlung der optimierten und/oder optimalen Bremskraft vorzusehen und über das Bremsdruckventil 20 einzustellen.

Um zu jeder Zeit eine entsprechend der aktuellen Gewichtskraft optimierte und/oder optimale Bremswirkung zu erzielen, wird eine Bremskraftvariation in Abhängigkeit von dem Bremsschlupf ermittelt. Der Bremsschlupf wird in der Steuerungs- und/oder Regelungseinrichtung 17, in Abhängigkeit von den von der zweiten Sensoreinheit 21 ermittelten Raddrehzahlen, ermittelt. Dazu wird die von der zweiten Sensoreinheit 21 ermittelte aktuelle Raddrehzahl mit einem erwarteten Raddrehzahlwert verglichen, dies kann der zuletzt gemessene Raddrehzahlwert sein. Der erwartete Bereich der Raddrehzahl kann im Vergleich zur zuletzt gemessenen Raddrehzahl laut einschlägiger Literatur beim Bremsen bis zu 25% geringer sein um die bestmögliche Bremswirkung zu erreichen. Weicht die aktuelle Raddrehzahl zu stark von der zuletzt gemessenen Raddrehzahl ab, beispielsweise wenn die Räder blockieren, wird in der Steuerungs- und/oder Regelungseinrichtung 17 eine optimierte und/oder optimale Bremskraft anhand der aktuellen Raddrehzahl ermittelt, sodass die folgende Raddrehzahl wieder im erwarteten Raddrehzahlbereich liegt. Anhand eines in der Speichereinheit 18 hinterlegten Zusammenhangs zwischen Bremsschlupf und Bremswirkung und/oder eines hinterlegten Zusammenhangs zwischen Bremswirkung und Bremskraft wird in der Steuerungs- und/oder Regelungseinrichtung 17 eine Bremskraftvariation ermittelt und automatisch am Bremsdruckregelventil 20 eingestellt. Die Bremskraftvariation ist dabei die Abweichung der optimierten und/oder optimalen Bremskraft von dem Grundwert. Da die Raddrehzahlen von der zweiten Sensoreinheit 21 kontinuierlich und in Echt-Zeit erfasst werden, wird die Bremskraftvariation kontinuierlich an den aktuell ermittelten Bremsschlupf angepasst. Diese Verfahrensweise ist an die bekannten ABS-Regelungen zumindest angelehnt und verhindert ein Blockieren der Fahrwerksräder 3. Die erfindungsgemäße Regelung unterscheidet sich jedoch von den bekannten ABS-Regelungen durch eine von der tatsächlichen Gewichtskraft der Verteilmaschine 1 abhängige, als Grundwert einstellbare Bremskraft, die durch die ermittelte Bremskraftvariation an den aktuell vorhandenen Bremsschlupf angepasst wird.

## Patentansprüche

1. Landwirtschaftliche Verteilmaschine (1) aufweisend einen Vorratsbehälter (5) zur Bevorratung auszubringenden Materials, insbesondere Saatgut, Dünge- und/oder Pflanzenschutzmittel, einen den Vorratsbehälter (5) tragenden Rahmen (7), welcher sich mittels eines Fahrwerksräder (3) umfassenden Fahrwerks auf dem Erdboden abstützt, wobei das Fahrwerk mit einer eine Bremskraftregelanlage (22) umfassenden Bremsanlage (25) ausgestattet ist, eine erste Sensoreinrichtung (16) zur Echtzeit-Erfassung der aktuell auf das Fahrwerk wirkenden Gewichtskraft, wobei die Bremskraftregelanlage (22) geeignet ist, die Bremskraft der Bremsanlage (25) anhand der erfassten aktuell auf das Fahrwerk wirkenden Gewichtskraft einzustellen und eine zweite Sensoreinrichtung (21) zur Echtzeit-Erfassung der Drehzahlen der Fahrwerksräder (3),
**dadurch gekennzeichnet, dass**
das Fahrwerk mittels eines hydraulischen und/oder pneumatischen Stellelements (14) zwischen einer Arbeitsposition und einer Transportposition verbringbar ist, wobei die erste Sensoreinrichtung (16) geeignet ist, den Arbeitsdruck des hydraulischen und/oder pneumatischen Stellelements (14) zu erfassen, und
die Bremskraftregelanlage (22) geeignet ist, mittels der von der zweiten Sensoreinrichtung (21) erfassten Drehzahlen der Fahrwerksräder (3) den Bremsschlupf der Fahrwerksräder (3) zu ermitteln und durch Zusammenführen der von der ersten Sensoreinrichtung (16) und der zweiten Sensoreinrichtung (21) erfassten und der von der Bremskraftregelanlage (22) ermittelten Daten die aktuelle Bremskraft derart zu regeln, dass zu jedem Zeitpunkt eine entsprechend der aktuellen Gewichtskraft optimierte und/oder optimale Bremswirkung erzielt wird.

2. Verteilmaschine (1) nach Anspruch 1, **dadurch gekennzeichnet, dass** die Bremskraftregelanlage (22) geeignet ist, die aktuell auf das Fahrwerk wirkende Gewichtskraft anhand des von der ersten Sensoreinrichtung (16) ermittelten Arbeitsdrucks des hydraulischen und/oder pneumatischen Stellelements (14) zu ermitteln.

3. Verteilmaschine (1) nach zumindest einem der vorangegangenen Ansprüche, wobei der Bremskraftregelanlage (22) eine Speichereinheit (18) zugeordnet ist und in der Speichereinheit (18) ein Zusammenhang zwischen aktuell auf das Fahrwerk wirkender Gewichtskraft und erforderlicher Bremskraft der Bremsanlage (25) hinterlegt ist, **dadurch gekennzeichnet, dass** die Bremskraftregelanlage (22) geeignet ist, die erforderliche Bremskraft der Bremsanlage (25) anhand des in der Speichereinheit (18) hinterlegten Zusammenhangs in optimierter Weise einzustellen.

4. Verteilmaschine nach Anspruch 3, **dadurch gekennzeichnet, dass** in der Speichereinheit (18) Zusammenhänge zwischen Bremsschlupf sowie optimaler Bremswirkung und/oder optimaler Bremswirkung sowie erforderlicher Bremskraft hinterlegt sind.

5. Verfahren zur Regelung der Bremskraft einer Landwirtschaftliche Verteilmaschine (1), aufweisend einen Vorratsbehälter (5) zur Bevorratung auszubringenden Materials, insbesondere Saatgut, Dünge- und/oder Pflanzenschutzmittel, einen den Vorratsbehälter (5) tragenden Rahmen (7), welcher sich mittels eines Fahrwerksräder (3) umfassenden Fahrwerks auf dem Erdboden abstützt, wobei das Fahrwerk mit einer eine Bremskraftregelanlage (22) umfassenden Bremsanlage (25) ausgestattet ist, wobei der Bremskraftregelanlage (22) eine Speichereinheit (18) zugeordnet ist und in der Speichereinheit (18) ein Zusammenhang zwischen aktuell auf das Fahrwerk wirkender Gewichtskraft und erforderlicher Bremskraft der Bremsanlage (25) hinterlegt ist, eine erste Sensoreinrichtung (16) zur Echtzeit-Erfassung der aktuell auf das Fahrwerk wirkenden Gewichtskraft, wobei die Bremskraftregelanlage (22) geeignet ist, die Bremskraft der Bremsanlage (25) anhand der erfassten aktuell auf das Fahrwerk wirkenden Gewichtskraft einzustellen, eine zweite Sensoreinrichtung (21) zur Echtzeit-Erfassung der Drehzahlen der Fahrwerksräder (3) und zumindest ein hydraulisches und/oder pneumatisches Stellelement (14) zum Verbringen des Fahrwerks zwischen Transport- und Arbeitsposition, welches die folgenden Verfahrensschritte umfasst:
• Verbringen des Fahrwerks mittels des hydraulischen und/oder pneumatischen Stellelements (14) in seine Transportposition,
• Erfassen des Arbeitsdrucks des hydraulischen oder pneumatischen Stellelements (14) in der Transportposition mittels der ersten Sensoreinrichtung (16),
• Ermitteln der aktuell auf das Fahrwerk wirkenden Gewichtskraft durch die Bremskraftregelanlage (22),
• Einstellen der erforderlichen Bremskraft der Bremsanlage (25) durch die Bremskraftregelanlage (22) anhand des in der Speichereinheit (18) hinterlegten Zusammenhangs zwischen aktuell auf das Fahrwerk wirkender Gewichtskraft und erforderlicher Bremskraft,
• Erfassen der Drehzahl der Fahrwerksräder (3) mittels der zweiten Sensoreinrichtung (21) und Ermitteln des aktuellen Bremsschlupfes durch die Bremskraftregelanlage (22),
• Ermitteln der erforderlichen Bremskraftvariation der Bremsanlage (25) anhand der in der Speichereinheit (18) hinterlegten Zusammenhänge zwischen Bremsschlupf und optimaler Bremswirkung sowie optimaler Bremswirkung und erforderlicher Bremskraft und
• Regeln der aktuellen Bremskraft anhand der erfassten und ermittelten Daten derart, dass zu jedem Zeitpunkt eine entsprechend der aktuellen Gewichtskraft optimierte und/oder optimale Bremswirkung erzielt wird.

6. Verfahren nach Anspruch 5, **dadurch gekennzeichnet, dass** die auf Basis der aktuell auf das Fahrwerk wirkenden Gewichtskraft ermittelte erforderliche Bremskraft durch die Bremskraftregelanlage (22) als Grundwert für die aktuelle Bremskraft eingestellt wird und dieser Grundwert der aktuellen Bremskraft anhand der auf Basis des Bremsschlupfes ermittelten erforderlichen Bremskraftvariation variiert wird.

## Claims

1. Agricultural spreader machine (1) having a reservoir container (5) for storing material which is to be discharged, in particular seeds, fertilizer and/or crop protection products, a frame (7) which bears the reservoir container (5) and is supported on the ground by means of running gear comprising running gear wheels (3), wherein the running gear is equipped with a brake system (25) comprising a braking-force control system (22), a first sensor device (16) for real-time detection of the weight force currently acting on the running gear, wherein the braking-force control system (22) is suitable for setting the braking force of the brake system (25) on the basis of the detected weight force which is currently acting on the running gear, and a second sensor device (21) for the real-time detection of the rotational speeds of the running gear wheels (3),
**characterized in that**
the running gear can be moved between a working position and a transportation position by means of a hydraulic and/or pneumatic actuating element (14), wherein the first sensor device (16) is suitable for detecting the working pressure of the hydraulic and/or pneumatic actuating element (14), and the braking-force control system (22) is suitable for determining the brake slip of the running gear wheels (3) by means of the rotational speeds of the running gear wheels (3), which are detected by the second sensor device (21), and for controlling the current braking force, by combining the data detected by the first sensor device (16) and the second sensor device (21) and the data determined by the braking-force control system (22), in such a way that at any time a braking effect which is optimized and/or optimum in accordance with the current weight force is achieved.

2. Spreader machine (1) according to Claim 1, **characterized in that** the braking-force control system (22) is suitable for determining the weight currently acting on the running gear, on the basis of the working pressure, determined by the first sensor device (16), of the hydraulic and/or pneumatic actuating element (14) .

3. Spreader machine (1) according to at least either of the preceding claims, wherein the braking-force control system (22) is assigned a memory unit (18), and a relationship between a weight which is currently acting on the running gear and the necessary braking force of the brake system (25) is stored in the memory unit (18), **characterized in that** the braking-force control system (22) is suitable for setting the necessary braking force of the brake system (25) in an optimized fashion on the basis of the relationship stored in the memory unit (18).

4. Spreader machine according to Claim 3, **characterized in that** relationships between the brake slip and the optimum braking effect and/or optimum braking effect and necessary braking force are stored in the memory unit (18).

5. Method for controlling the braking force of an agricultural spreader machine (1), having a reservoir container (5) for storing material which is to be discharged, in particular seeds, fertilizer and/or crop protection products, a frame (7) which bears the reservoir container (5) and is supported on the ground by means of running gear which comprises running gear wheels (3), wherein the running gear is equipped with a brake system (25) comprising a braking-force control system (22), wherein the braking-force control system (22) is assigned a memory unit (18), and a relationship between a weight which is currently acting on the running gear and the necessary braking force of the brake system (25) is stored in the memory unit (18), a first sensor device (16) for real-time detection of the weight which is currently acting on the running gear, wherein the braking-force control system (22) is suitable for setting the braking force of the brake system (25) on the basis of the detected weight which is currently acting on the running gear, a second sensor device (21) for the real-time detection of the rotational speeds of the running gear wheels (3), and at least one hydraulic and/or pneumatic actuating element (14) for moving the running gear between the transportation position and working position, which method comprises the following method steps:
• moving the running gear into its transportation position by means of the hydraulic and/or pneumatic actuating element (14),
• detecting the working pressure of the hydraulic or pneumatic actuating element (14) in the transportation position by means of the first sensor device (16),
• determining the weight which is currently acting on the running gear, by means of the braking-force control system (22),
• setting the necessary braking force of the brake system (25) by means of the braking-force control system (22) on the basis of the relationship, stored in the memory unit (18), between the weight which is currently acting on the running gear and the necessary braking force,
• detecting the rotational speed of the running gear wheels (3) by means of the second sensor device (21), and determining the current brake slip by means of the braking-force control system (22),
• determining the necessary braking force variation of the brake system (25) on the basis of the relationships, stored in the memory unit (18), between the brake slip and an optimum braking effect and between an optimum braking effect and necessary braking force, and
• controlling the current braking force on the basis of the detected and determined data in such a way that at any time a braking effect which is optimized and/or optimum in accordance with the current weight is achieved.

6. Method according to Claim 5, **characterized in that** the necessary braking force which is determined on the basis of the weight which is currently acting on the running gear is set by the braking-force control system (22) as a basis value for the current braking force, and this basis value of the current braking force is varied by means of the necessary braking force variation which is determined on the basis of the brake slip.

## Revendications

1. Machine (1) d'épandage agricole présentant
un récipient de réserve (5) qui contient le matériau à appliquer, en particulier des semences, de engrais et/ou des agents de protection des plantes,
un bâti (7) portant le récipient de réserve (5) et s'appuyant sur le sol au moyen d'un train de roulement comportant des roues (3) de train de roulement,
le train de roulement étant équipé d'une installation de freinage (25) comprenant une installation (22) de régulation du freinage et un premier dispositif de détection (16) qui saisit en temps réel la force du poids exercée à chaque instant sur le train de roulement, l'installation (22) de régulation du freinage convenant pour régler la force de freinage de l'installation de freinage (25) à l'aide de la force du poids, exercée à chaque instant sur le train de roulement, qui a été saisie, et un deuxième dispositif de détection (21) qui saisit en temps réel la vitesse de rotation des roues (3) du train de roulement,
**caractérisée en ce que**
le train de roulement peut être déplacé entre une position de travail et une position de transport au moyen d'un élément hydraulique et/ou pneumatique de réglage (14),
**en ce que** le premier dispositif de détection (16) convient pour saisir la pression de travail de l'élément hydraulique et/ou pneumatique de réglage (14) et
**en ce que** l'installation (22) de régulation du freinage convient pour déterminer le patinage de freinage des roues (3) du train de roulement au moyen des vitesses de rotation des roues (3) du train de roulement saisies par le deuxième dispositif de détection (21) et pour réguler à chaque instant la force de freinage en rassemblant les données saisies par le premier dispositif de détection (16) et le deuxième dispositif de détection (21) et déterminées par l'installation (22) de régulation du freinage de telle sorte qu'en chaque instant soit obtenue une action de freinage optimale et/ou optimisée en correspondance à la force du poids en chaque instant.

2. Machine (1) d'épandage selon la revendication 1, **caractérisée en ce que** l'installation (22) de régulation du freinage convient pour déterminer la force du poids agissant en chaque instant sur le train de roulement au moyen de la pression de travail de l'élément hydraulique et/ou pneumatique de réglage (14) déterminée par le premier dispositif de détection (16).

3. Machine (1) d'épandage selon au moins l'une des revendications précédentes, dans laquelle une unité de mémoire (18) est associée à l'installation (22) de régulation du freinage, une relation entre la force du poids agissant en chaque instant sur le train de roulement et la force de freinage que doit appliquer l'installation de freinage (25) étant conservée dans l'unité de freinage (18), **caractérisée en ce que** l'installation (22) de régulation du freinage convient pour régler de manière optimisée à l'aide de la relation conservée dans l'unité de freinage (18) la force de freinage que doit appliquer l'installation de freinage (25).

4. Machine d'épandage selon la revendication 3, **caractérisée en ce que** des relations entre le patinage au freinage et une action optimale de freinage et/ou entre une action optimale de freinage et la force de freinage nécessaire sont conservées dans l'unité de freinage (18).

5. Procédé de régulation de la force de freinage d'une machine (1) d'épandage agricole présentant un récipient de réserve (5) qui contient le matériau à appliquer, en particulier des semences, de l'engrais et/ou des agents de protection des plantes, un bâti (7) portant le récipient de réserve (5) et s'appuyant sur le sol au moyen d'un train de roulement comportant des roues (3) de train de roulement, le train de roulement étant équipé d'une installation de freinage (25) comprenant une installation (22) de régulation du freinage, une unité de mémoire (18) associée à l'installation (22) de régulation du freinage, une relation entre la force du poids agissant en chaque instant sur le train de roulement et la force de freinage que doit appliquer l'installation de freinage (25) étant conservée dans l'unité de freinage (18), un premier dispositif de détection (16) saisissant en temps réel la force du poids exercée à chaque instant sur le train de roulement, l'installation (22) de régulation du freinage convenant pour régler la force de freinage de l'installation de freinage (25) à l'aide de la force du poids, exercée à chaque instant sur le train de roulement, qui a été saisie, un deuxième dispositif de détection (21) saisissant en temps réel la vitesse de rotation des roues (3) du train de roulement et au moins un élément hydraulique et/ou pneumatique de réglage (14) déplaçant le train de roulement entre une position de travail et une position de transport au moyen d'un élément hydraulique et/ou pneumatique de réglage (14),
le procédé présentant les étapes suivantes :
- placement du train de roulement en position de transport au moyen de l'élément hydraulique et/ou pneumatique de réglage (14),
- en position de transport, saisie de la pression de travail de l'élément hydraulique et/ou pneumatique de réglage (14) au moyen du premier dispositif de détection (16),
- détermination par l'installation (22) de régulation du freinage de la force du poids agissant en chaque instant sur le train de roulement,
- réglage par l'installation (22) de régulation du freinage de la force de freinage que doit appliquer l'installation de freinage (25), à l'aide de la relation, conservée dans l'unité de freinage (18), entre la force du poids agissant en chaque instant sur le train de roulement et la force de freinage que doit appliquer l'installation de freinage (25),
- saisie de la vitesse de rotation des roues (3) du train de roulement au moyen du deuxième dispositif de détection (21) et détermination du patinage au freinage en chaque instant par l'installation (22) de régulation du freinage,
- détermination de la modification nécessaire de la force de freinage de l'installation de freinage (25) à l'aide des relations, conservées dans l'unité de freinage (18), entre le patinage au freinage et une action optimale de freinage et/ou entre une action optimale de freinage et la force de freinage nécessaire et
- régulation de la force de freinage en chaque instant à l'aide des données qui ont été saisies et des données qui ont été déterminées de telle sorte qu'en chaque instant soit obtenue une action de freinage optimale et/ou optimisée en correspondance à la force du poids en chaque instant.

6. Procédé selon la revendication 5, **caractérisée en ce que** la force de freinage nécessaire en chaque instant, déterminée par l'installation (22) de régulation du freinage sur la base de la force du poids agissant sur le train de roulement est utilisée comme valeur de base de la force de freinage en chaque instant et **en ce que** cette valeur de base de la force de freinage en chaque instant est modifiée à l'aide de la modification nécessaire qui a été déterminée sur la base du patinage au freinage.
